# NOUVEAU FASCICULE DE BREVET EUROPEEN

(11) **EP 2 897 457 B2**
(45) Date de publication et mention de la décision concernant l'opposition: **12.02.2020**
(45) Mention de la délivrance du brevet: 22.03.2017
(21) Numéro de dépôt: 13762493.8
(22) Date de dépôt: 16.09.2013
(51) Int. Cl.: A01K 5/02, A01K 1/10

(54) **VÉHICULE ÉQUIPÉ D'UN DISPOSITIF POUSSEUR POUR POUSSER DES ALIMENTS SUR LE SOL**
FAHRZEUG AUSGERÜSTET MIT EINER SCHIEBERVORRICHTUNG ZUM SCHIEBEN VON FUTTER AM BODEN
VEHICLE EQUIPPED WITH A PUSHER DEVICE FOR PUSHING FEED ALONG THE GROUND

(30) Priorité: 19.09.2012 FR 1258807
(43) Date de publication de la demande: 29.07.2015
(73) Titulaire: Jeantil, 35590 L'Hermitage (FR)
(72) Inventeur: JEANTIL, Philippe, 35132 Vezin le Coquet (FR)
(74) Mandataire: Lavoix
(86) Numéro de dépôt international: PCT/EP2013/069106
(87) Numéro de publication internationale: WO 2014/044629

(56) Documents cités:
- EP-A1- 1 779 722
- DE-C1- 10 118 026
- FR-A1- 2 862 489
- NL-A- 9 400 771

## Description

La présente invention concerne le domaine de l'élevage de bétail, et plus particulièrement de l'alimentation du bétail.

Une étable comprend généralement une aire de vie séparée d'un couloir d'alimentation par une barrière d'alimentation permettant au bétail présent dans l'air de vie de passer la tête pour s'alimenter dans le couloir d'alimentation. La barrière d'alimentation est par exemple un cornadis.

Des aliments (fourrage, granules...) sont déposés le long de la barrière d'alimentation. La composition des aliments et leur quantité sont déterminés pour une alimentation appropriée du bétail. En mangeant, les animaux repoussent les aliments à l'écart de la barrière d'alimentation. Il est souhaitable de repousser les aliments vers la barrière d'alimentation pour permettre aux animaux de s'alimenter selon la dose appropriée.

EP 1 779 722 A1 divulgue des véhicules pour repousser les aliments sur le sol vers une barrière d'alimentation. Un véhicule comprend une lame de raclage en forme de V pointant vers l'avant pour repousser des aliments sur les côtés du véhicule du fait du déplacement de celui-ci. Un autre véhicule comprend une lame de raclage rectiligne mobile en rotation autour d'un axe vertical pour repousser des aliments sur le côté du véhicule par un mouvement de rotation alternatif de la lame de raclage combiné à un déplacement incrémental du véhicule. Encore un autre véhicule comprend une lame de raclage rectiligne s'étendant parallèlement à la direction longitudinale du véhicule et mobile en translation suivant une direction transversale du véhicule pour repousser les aliments par un mouvement de translation alternatif combiné à un déplacement incrémental du véhicule.

EP 2 007 191 A1 divulgue un véhicule autonome sans équipage pour pousser des aliments sur le sol, comprenant un chariot pourvu d'un élément circulaire rotatif entourant le chariot et monté rotatif autour d'un axe proche de la verticale, pour pousser les aliments sur le sol contre une barrière d'alimentation.

NL 9 400 771 A1 divulguent des véhicules pour pousser des aliments sur le sol.

DE 101 18 026 C1 divuluge un tracteur muni d'un dispositif pousseur possédant un organe pousseur réglable notamment par coulissement suivant une direction transversale du tracteur.

Un des buts de l'invention est de proposer un dispositif pousseur pour pousser des aliments sur le sol devant un véhicule, qui soit efficace et facile à mette en oeuvre.

A cet effet, l'invention propose un véhicule, selon la revendication 1. Dans des modes de réalisation particuliers, le véhicule comprend une ou plusieurs des caractéristiques optionnelles des revendications 2 à 15. L'invention concerne encore une installation d'alimentation d'animaux d'élevage selon la revendication 16.

L'invention et ses avantages seront mieux compris à la lecture de la description qui va suivre, donnée uniquement à titre d'exemple et faite en référence aux dessins annexés, sur lesquels :
- les Figures 1 et 2 sont des vues schématiques en perspective de la partie avant d'un véhicule autonome sans équipage, muni d'un dispositif pousseur pour pousser des aliments sur le sol ;
- les Figures 3 et 4 sont des vues schématiques de face du véhicule se déplaçant le long d'une barrière d'alimentation ;
- les Figures 5 et 6 sont des vues schématiques de dessus du véhicule se déplaçant le long de la barrière d'alimentation ; et
- les Figures 7 et 8 sont des vues de côté et en perspective du véhicule équipé en outre d'un ensemble de distribution d'aliments.

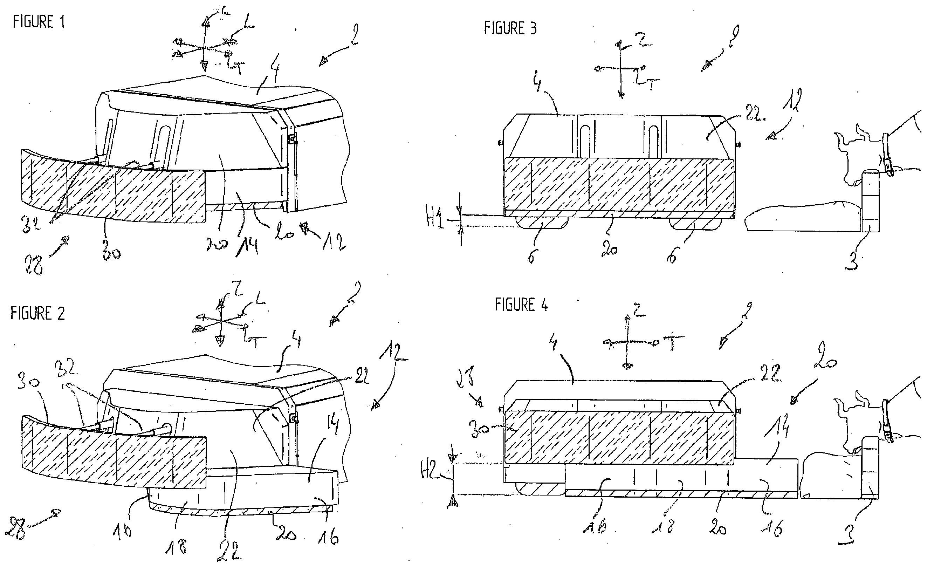

Le véhicule 2 représenté sur les Figures 1 à 6 est un véhicule automatique. Il est autonome et sans équipage. Il est conçu pour se déplacer automatiquement suivant une programmation déterminée, en se repérant dans son environnement, éventuellement à l'aide d'un guide ou de balises.

Le véhicule 2 est configuré pour se déplacer dans un couloir d'alimentation d'une étable, le long d'une barrière d'alimentation 3 séparant le couloir d'alimentation d'une aire de vie pour du bétail, en repoussant des aliments au sol contre la barrière d'alimentation 3. La barrière permet au bétail de passer la tête pour manger des aliments posés sur le sol le long de la barrière d'alimentation.

Le véhicule 2 est prévu pour se déplacer suivant une direction longitudinale L correspondant à la direction de déplacement rectiligne du véhicule en marche avant ou arrière.

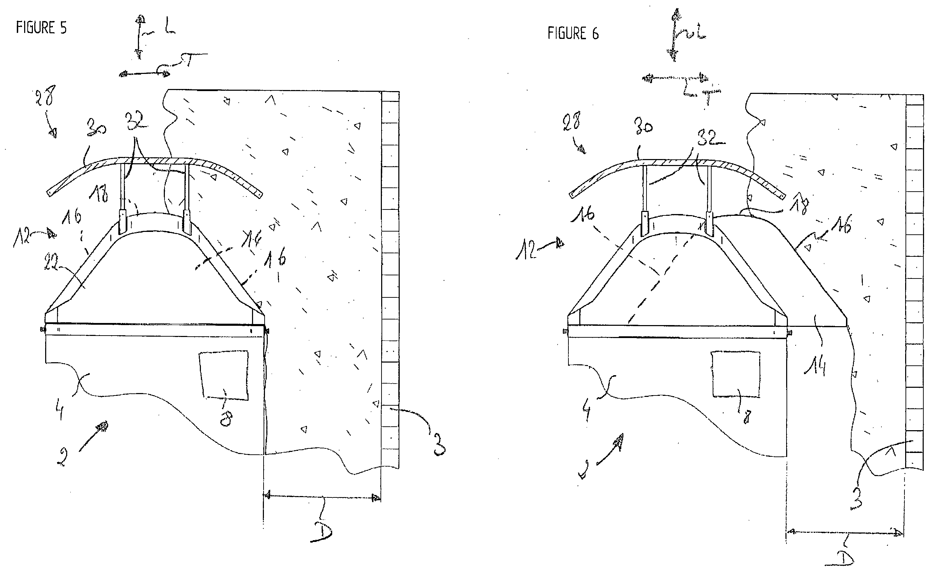

Dans la suite de la description, les termes « longitudinal », « transversal », « vertical », « avant », « arrière », « gauche », « droite », « haut » et « bas » s'entendent par référence à la direction longitudinale L et au sens de déplacement en marche avant (vers le haut sur les Figures 5 et 6).

Le véhicule 2 comprend un chariot 4 pourvu de roues 6 de roulage au sol (Figure 3). Le chariot 4 comprend au moins une roue motrice motorisée pour commander le déplacement du véhicule 2 vers l'avant ou vers l'arrière et au moins une roue directrice pour commander la direction du véhicule 2.

Comme visible sur les Figures 5 et 6, le véhicule 2 comprend un dispositif de guidage 8 automatique pour commander les déplacements du véhicule de manière automatique.

Le dispositif de guidage 8 comprend par exemple un capteur électromagnétique coopérant avec un fil continu enterré dans le sol ou avec des bornes magnétiques enterrées dans le sol à distance les unes des autres. En variante, le dispositif de guidage comprend un capteur optique coopérant avec une ligne dessinée sur le sol, des marques dessinées sur le sol ou des marques en hauteur réparties dans l'étable. En variante, le dispositif comprend un détecteur laser et des bornes réfléchissantes réparties dans l'étable. En variante, le dispositif de guidage comprend un dispositif de vision comprenant au moins une caméra, de préférence deux caméra pour une vision stéréoscopique, et un dispositif d'analyse d'image propre à reconnaître l'environnement du véhicule après apprentissage.

Le dispositif de guidage 8 commande l'entraînement de la ou chaque roue motrice et l'orientation de la ou chaque roue directrice pour commander les déplacements du véhicule 2.

Comme illustrés sur les Figures 1 à 6, le véhicule 2 comprend un dispositif pousseur 12 pour pousser des aliments sur le sol devant le véhicule 2.

Le dispositif pousseur 12 comprend un organe pousseur 14 - ou racle - configuré pour être déplacé le long du sol et pousser des aliments sur le sol latéralement sur le côté du véhicule 2 suivant une direction transversale T, du fait du déplacement dispositif pousseur 12 suivant la direction longitudinale L, la direction transversale T étant perpendiculaire à la direction longitudinale L.

L'organe pousseur 14 est ici formé pour pousser les aliments latéralement des deux côtés de l'organe pousseur 14. L'organe pousseur 14 forme une étrave de raclage. Il est en forme de « V » pointant suivant la direction longitudinale, vers l'extérieur du véhicule 2, ici vers l'avant.

L'organe pousseur 14 possède deux segments latéraux 16 (Figures 6 et 4), chacun orienté de manière à repousser des aliments latéralement sur un côté respectif du véhicule 2. Chaque segment latéral est incliné par rapport à la direction longitudinale L et la direction transversale T en étant orienté vers l'avant et vers un côté latéral respectif du véhicule. Les deux segments latéraux 16 sont reliés par un segment intermédiaire 18 curviligne convexe s'étendant transversalement.

L'organe pousseur 14 est pourvu sur son bord inférieur d'une bande d'usure 20 (Figures 1 à 4) par laquelle l'organe pousseur 14 vient frotter sur le sol. La bande d'usure 20 est remplacée lorsqu'elle est usée.

L'organe pousseur 14 est mobile en translation suivant la direction transversale T, entre une position rétractée (Figures 1 et 3), dans laquelle l'organe pousseur 14 s'inscrit en vue suivant la direction longitudinale L dans la largeur du chariot 4, sans faire saillie latéralement par rapport au chariot 4, et une position déployée (Figure 2 et 4), dans laquelle l'organe pousseur 14 est déporté transversalement par rapport à la position rétractée, l'organe pousseur 14 faisant saillie transversalement du chariot 4, sur un côté latéral de celui-ci.

L'organe pousseur 14 est de préférence déplaçable transversalement dans les deux sens, vers une position déployée à droite, en saillie sur la droite du chariot 4 et vers une position déployée à gauche, en saillie sur la gauche du chariot 4.

Le dispositif pousseur 12 possède une configuration inactive (Figure 1 et 3) dans laquelle l'organe pousseur 14 est relevé à l'écart du sol et une configuration active (Figures 2 et 4) dans laquelle l'organe pousseur 14 est abaissé pour pousser des aliments sur le sol.

De préférence, en configuration inactive, l'organe pousseur 14 est en position rétractée, comme illustré sur les Figures 1 et 3, de manière à ne pas faire saillie latéralement du chariot 4.

Le dispositif pousseur 12 comprend un support 22 portant l'organe pousseur 14. L'organe pousseur 14 est monté sur le support 22 en étant mobile en translation suivant la direction transversale T par rapport au support 22. Ceci permet le déplacement de l'organe pousseur 14 entre la position rétractée et la position déployée.

Le dispositif pousseur 12 comprend un actionneur de déploiement pour commander le déplacement de l'organe pousseur 14 suivant la direction transversal T entre la position rétractée et la position déployée. L'actionneur de déploiement est disposé entre l'organe pousseur 14 et le support 22.

Le support 22 est monté sur le chariot 4 en étant mobile en translation suivant la direction verticale Z par rapport au chariot 4 pour abaisser l'organe pousseur 14 en configuration active du dispositif pousseur 12 ou relever l'organe pousseur 14 en configuration inactive du dispositif pousseur 12.

Le dispositif pousseur 12 comprend un actionneur de relevage (non représenté) pour commander le déplacement vertical du support 22 entre la configuration inactive et la configuration active. L'actionneur de relevage est disposé entre le support 22 et le chariot 4. L'actionneur de relevage est par exemple un actionneur pneumatique, hydraulique ou électrique.

Le dispositif pousseur 12 comprend un dispositif de détection 28 frontal pour détecter des obstacles se présentant devant le véhicule 2, en particulier devant le dispositif pousseur 12. Le dispositif de détection 28 est configuré pour commander automatiquement l'arrêt du véhicule 2 à la détection d'un obstacle sur la trajectoire du véhicule 2.

Le dispositif de détection 28 comprend ici un palpeur 30 s'étendant en porte-à-faux à l'avant de l'organe pousseur 14. Le palpeur 30 s'étend transversalement, sensiblement sur toute la largeur du véhicule 2. Le palpeur 30 est porté par au moins un bras, ici deux bras 32. Chaque bras 32 s'étend suivant la direction longitudinale L. Chaque bras 32 est télescopique pour permettre au palpeur 30 de reculer lorsqu'il percute un obstacle.

Le dispositif de détection 28 détecte tout contact du palpeur 30 avec un obstacle et commande immédiatement l'arrêt du véhicule 2.

En vue de face du dispositif pousseur 12, et en position abaissée et rétractée de l'organe pousseur 14 (Figure 3), l'organe pousseur 14 ne fait pas saillie latéralement par rapport au palpeur 30.

En vue de face du dispositif pousseur 12 et en position abaissée et déployée de l'organe pousseur 14 (Figure 4), l'organe pousseur 14 fait saillie latéralement par rapport au palpeur 30.

Le dispositif de détection 28 est ici un dispositif de détection par contact. En variante, le dispositif de détection est un dispositif de détection a distance, sans contact. Un tel dispositif de détection est par exemple un dispositif optique à caméra et analyse d'image, un dispositif à scrutateur laser, un dispositif à scrutateur à ultrasons ou tout autre type de dispositif de détection d'obstacle sans contact.

Le dispositif de détection 28 possède une configuration basse (Figure 1 et 3) dans laquelle le dispositif de détection 28 détecte des obstacles à partir d'une première hauteur H1, et une configuration haute (Figure 2 et 4) dans laquelle le dispositif de détection 28 détecte des obstacles à partir d'une deuxième hauteur H2 supérieure à la première hauteur H1.

La configuration basse permet une détection avec un niveau de sécurité plus élevé, en permettant la détection d'obstacle à partir de la première hauteur H1, et la configuration haute permet une détection avec un niveau de sécurité moins élevé, en permettant la détection d'obstacle uniquement à partir de la deuxième hauteur H2.

La deuxième hauteur H2 est choisie pour être supérieure à la hauteur d'aliments sur le sol repoussés par du bétail à l'écart de la barrière d'alimentation, et ainsi éviter un arrêt inutile du véhicule 2 lorsque celui-ci repousse des aliments sur le sol.

Le dispositif de détection 28 est placé dans la configuration basse lorsque le dispositif pousseur 12 est en configuration inactive, pour assurer un niveau de sécurité élevé, et le dispositif de détection 28 est placé dans la configuration haute lorsque le dispositif pousseur 12 est en configuration active.

Dans le cas présent, le palpeur 30 est mobile verticalement entre une position basse (Figure 3) correspondant à la configuration basse et une position haute (Figure 4) correspondant à la configuration haute. La première hauteur H1 correspond à la hauteur du bord inférieur du palpeur 30 en position basse et la deuxième hauteur H2 correspond à la hauteur du bord inférieur du palpeur 30 en position haute.

Le dispositif de détection 28 est par exemple monté sur le support 22. Le dispositif de détection 28 est monté mobile verticalement sur le support 22 avec une amplitude suffisante permettant de relever le palpeur 30 en position haute en compensant le mouvement de descente du support 22 pour abaisser l'organe pousseur 14 à proximité ou au contact du sol.

Le dispositif de détection 28 comprend un actionneur de réglage (non représenté) pour abaisser le palpeur 30 ou relever le palpeur 30. L'actionneur de réglage est disposé entre le support 22 et les bras 32. L'actionneur de réglage est par exemple un actionneur pneumatique, hydraulique ou électrique.

Le dispositif pousseur 12 intégrant le dispositif de détection 28 forme un module pousseur propre à être monté sur un véhicule existant.

En fonctionnement, lorsque le véhicule 2 se déplace, par défaut, le dispositif de détection 28 est disposé dans la configuration basse et l'organe pousseur 14 est relevé.

Pour repousser des aliments sur le sol vers une barrière d'alimentation, le dispositif de détection 28 est disposé dans la configuration haute et l'organe pousseur est abaissé.

Le dispositif de guidage 8 commande le véhicule 2 pour déplacer le véhicule 2 le long de la barrière d'alimentation 3, de préférence à une distance de passage prédéterminée constante de la barrière d'alimentation.

Du fait du déplacement du véhicule, l'organe pousseur 14 pousse des aliments se trouvant sur la trajectoire du véhicule 2 vers la barrière d'alimentation 3.

Comme illustré sur la Figure 5, le véhicule 2 effectue par exemple un premier passage à la distance de passage D prédéterminée par rapport à la barrière d'alimentation, l'organe pousseur 14 étant abaissé et en position rétractée.

Comme illustré sur la Figure 6, le véhicule 2 effectue ensuite un deuxième passage, toujours à la même distance de passage D, mais l'organe pousseur 14 est abaissé en position déployée. L'organe pousseur 14 est déporté latéralement par rapport au chariot 4, vers la barrière d'alimentation 3.

Le chariot 4 reste ainsi à la distance de passage D de la barrière d'alimentation 3, tout en permettant de rapprocher les aliments de la barrière d'alimentation 3 à une distance appropriée pour leur consommation par le bétail.

De préférence, le dispositif de guidage 8 est configuré de telle manière que le véhicule 2 se déplace à une première vitesse lorsque le dispositif de détection 28 est dans la configuration basse, et à une deuxième vitesse lorsque le dispositif de détection 28 est dans la configuration haute, la deuxième vitesse étant inférieure à la première vitesse.

Ceci permet de limiter les conséquences d'un choc éventuel avec un obstacle bas qui ne serait pas détecté du fait que le dispositif de détection 28 est dans la configuration haute.

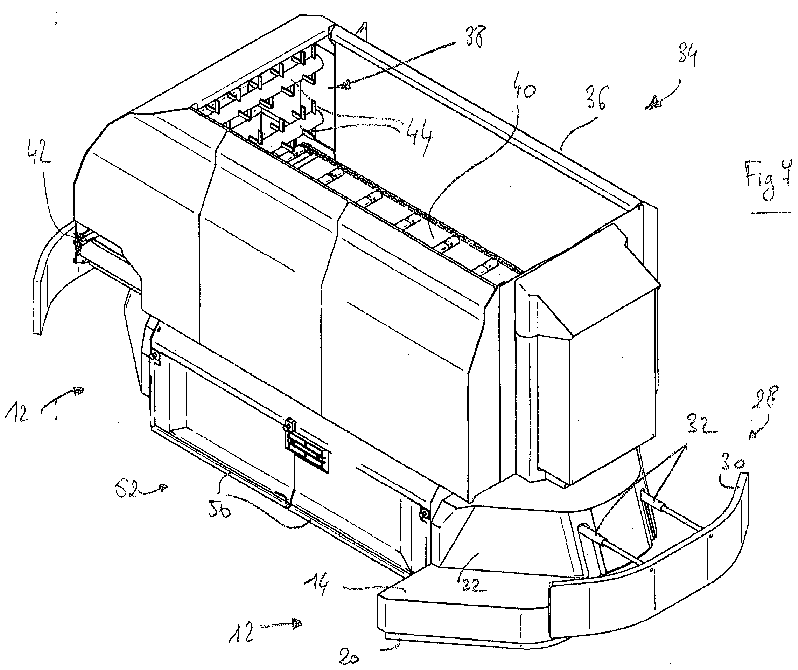

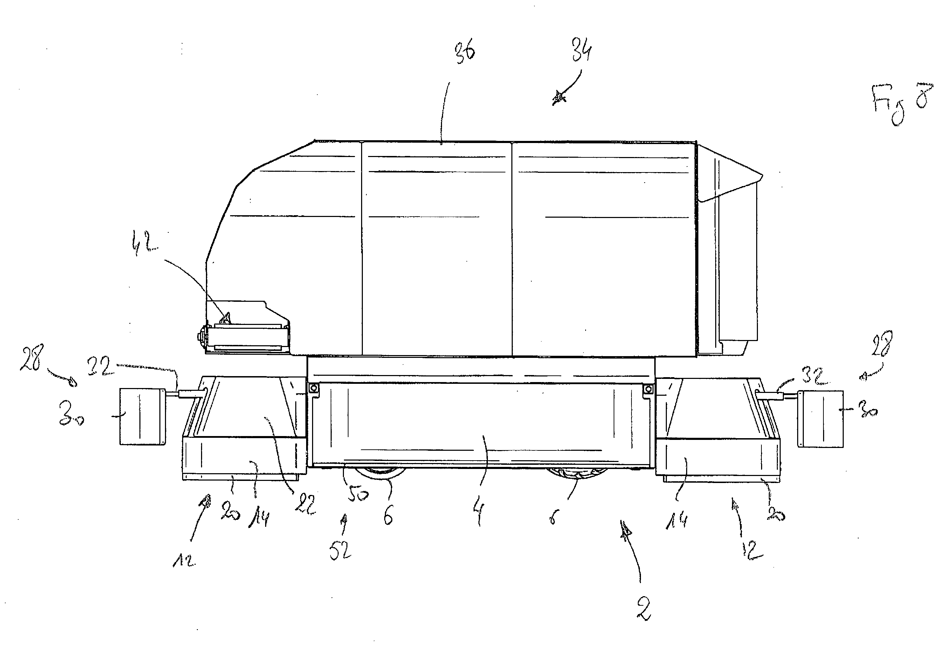

Comme illustré sur les Figures 7 et 8, dans un mode de réalisation, le véhicule 2 est muni d'un dispositif pousseur 12 avant et d'un dispositif pousseur 12 arrière, par exemple si le véhicule est configuré pour opérer en marche avant et en marche arrière, ce qui permet par exemple d'effectuer des aller-retour sans faire demi-tour.

Comme illustré sur les Figures 7 et 8, dans un mode de réalisation, le véhicule 2 est avantageusement pourvu d'un ensemble de distribution 34 pour distribuer des aliments le long de la barrière d'alimentation 3. Le véhicule 2 forme ainsi un véhicule automatique de distribution d'aliments.

L'ensemble de distribution 34 comprend un conteneur 36, un démêleur 38 pour démêler des aliments reçu dans le conteneur 36, un convoyeur 40 pour pousser des aliments reçu dans le conteneur 36 vers le démêleur 38, et un distributeur 42 pour distribuer les aliments sur le côté du véhicule 2.

Le convoyeur 36 est par exemple un convoyeur à chaîne ou à bande.

Le démêleur 38 comprend au moins un rotor 44, ici deux rotors 44 parallèles. Les rotors 44 sont orientés horizontalement et rotatifs autour de leurs axes respectifs. La rotation des rotors 44 permet de démêler des aliments poussés par le convoyeur 36 vers le démêleur 38. Les aliments proviennent par exemple d'un ensilage est sont initialement compactés lorsqu'ils sont versés dans le conteneur 36.

Le distributeur 42 est un distributeur à bande débouchant latéralement sur le côté du véhicule 2 pour déposer les aliments le long d'une barrière d'alimentation 3 le long de laquelle se déplace le véhicule 2, par exemple entre le véhicule 2 et la barrière d'alimentation 3.

Le maintien d'une même distance de passage D au premier passage et au deuxième passage permet au distributeur 42 de déposer les aliments de manière appropriée le long de la barrière d'alimentation 3 lors des deux passages.

Le maintien d'une même distance de passage D au premier passage et au deuxième passage permet de maintenir une distance suffisante par rapport au bétail pour éviter de blesser les animaux.

Le déplacement transversal de l'organe pousseur 14 permet de régler sa position transversale pour repousser les aliments de manière appropriée tout en conservant la distance de passage D pour le véhicule 2.

Lors du premier passage et/ou du deuxième passage, le véhicule 2 distribue des aliments. Les aliments sont déposés le long de la barrière d'alimentation par le distributeur.

Le véhicule 2 se déplace de préférence de manière autonome pour collecter des aliments dans des stations de chargement d'aliment automatisées, puis pour distribuer les aliments le long des barrières d'alimentation. WO 2010/094902 divulgue une installation automatisée pour l'alimentation d'animaux comprenant un tel véhicule autonome sans équipage et des stations pour préparer des aliments à distribuer par le véhicule.

Comme visible sur les Figures 7 et 8, dans un mode de réalisation, le véhicule 2 comprend un dispositif de détection 50 latéral, comprenant par exemple des palpeurs 52 latéraux s'étendant le long du bord inférieur d'un carénage latéral 54 du véhicule, pour détecter des obstacles venant toucher le véhicule sur le côté. En position déployée, l'organe pousseur 14 s'étend latéralement au-delà des palpeurs latéraux 52.

Lors du passage du véhicule 2 le long de la barrière d'alimentation 3, l'organe pousseur 14 déporté latéralement protège les palpeurs 52 qui ne sont pas activés par les aliments poussés.

Le véhicule 2 est indépendamment muni de deux dispositifs pousseurs 12, d'un dispositif de détection latéral 50 ou d'un ensemble de distribution pour distribuer des aliments.

L'invention n'est pas limitée au mode de réalisation illustré.

Dans une variante, le véhicule est mobile le long d'une voie ferrée prévue au sol. Dans une autre variante, le véhicule est suspendu à un rail le long duquel il se déplace. Dans ces deux variantes, le véhicule est de préférence autonome et sans équipage. Le véhicule se déplace de manière automatisée le long de la voie ferrée ou du rail pour repousser les aliments sur le sol et le cas échéant pour collecter des aliments dans des stations de chargement d'aliment automatisées.

En variante, le dispositif de raclage pour repousser des aliments est monté sur un véhicule avec équipage, le véhicule possédant un poste de pilotage pour un opérateur. Le véhicule comprend un dispositif de commande de direction à command manuelle ou est guidé le long d'une voie ferrée prévue au sol ou suspendu à un rail. Lorsque le véhicule n'est pas autonome, le dispositif de détection est optionnel.

L'association d'un organe pousseur et d'un dispositif de détection d'obstacle est intéressante indépendamment du type d'organe pousseur.

Ainsi, de manière générale, l'invention concerne un dispositif pousseur pour pousser des aliments sur le sol, destiné à équiper un véhicule, le dispositif pousseur comprenant un support et un organe pousseur porté par le support, l'organe pousseur étant prévu pour pousser des aliments sur le sol et un dispositif de détection pour détecter un obstacle présent devant le dispositif pousseur.

De préférence, le dispositif pousseur est configuré pour abaisser l'organe pousseur à proximité du sol ou relever l'organe pousseur à l'écart du sol, et le dispositif de détection possède une configuration basse pour détecter des obstacles devant le dispositif pousseur à partir d'une première hauteur par rapport au sol lorsque l'organe pousseur est relevé et une configuration haute pour détecter des obstacles devant le dispositif pousseur à partir d'une deuxième hauteur supérieure à la première hauteur lorsque l'organe pousseur est relevé.

## Revendications

1. Véhicule comprenant un chariot (4) et un dispositif pousseur (12) monté à une extrémité du chariot pour pousser des aliments sur le sol sur le côté du véhicule, le dispositif pousseur (12) comprenant un support (22) et un organe pousseur (14) porté par le support, l'organe pousseur (14) étant prévu pour pousser des aliments sur le sol sur le côté du véhicule suivant une direction transversale (T) du véhicule du fait du déplacement du véhicule suivant une direction longitudinale (L) du véhicule perpendiculaire à la direction transversale (T), **caractérisé en ce que** l'organe pousseur (14) est mobile par rapport au support (22) en translation suivant la direction transversale (T) entre une position rétractée dans laquelle l'organe pousseur se situe entre les bords latéraux du chariot (4) et au moins une position déployée dans laquelle l'organe pousseur (14) fait saillie latéralement par rapport au chariot (4).

2. Véhicule selon la revendication 1, dans le dispositif pousseur (12) comprend un actionneur de déploiement pour commander le déplacement de l'organe pousseur (14) suivant la direction transversal (T) entre la position rétractée et la position déployée.

3. Véhicule selon la revendication 1 ou 2, dans lequel l'organe pousseur (14) est mobile suivant la direction transversale (T) entre une position rétractée et deux positions déployées situées de part et d'autre de la position rétractée.

4. Véhicule selon l'une quelconque des revendications précédentes, dans lequel l'organe pousseur (14) est mobile de telle manière à rapprocher ou écarter l'organe pousseur (14) du sol lorsque le dispositif pousseur est monté sur un véhicule.

5. Véhicule selon l'une quelconque des revendications précédentes, dans lequel l'organe pousseur (14) est mobile suivant une direction verticale (Z) perpendiculaire à la direction longitudinale (L) et à la direction transversale (T).

6. Véhicule selon l'une quelconque des revendications précédentes, dans lequel le support (22) est mobile suivant une direction verticale (Z) perpendiculaire à la direction longitudinale (L) et à la direction transversale (T).

7. Véhicule selon l'une quelconque des revendications précédentes, comprenant un dispositif de détection (28) pour détecter un obstacle présent devant le dispositif pousseur (12).

8. Véhicule selon la revendication 7, dans lequel le dispositif de détection (28) possède une configuration basse pour détecter des obstacles devant le dispositif pousseur (12) à partir d'une première hauteur (H1) par rapport au sol et une configuration haute pour détecter des obstacles devant le dispositif pousseur (12) à partir d'une deuxième hauteur (H2) supérieure à la première hauteur (H1).

9. Véhicule selon la revendication 7 ou 8, dans lequel le dispositif de détection est à détection par contact ou sans contact.

10. Véhicule selon l'une quelconque des revendications 7 à 9, dans lequel le dispositif de détection (28) comprend un palpeur (30) pour détecter un obstacle touchant le palpeur (30), le palpeur (30) s'étendant suivant la direction transversale (T), à distance de l'organe pousseur (14) suivant la direction longitudinale (L).

11. Véhicule selon la revendication 10, dans lequel, en vue suivant la direction longitudinale (L), l'organe pousseur (14) en position rétractée est situé dans l'alignement du palpeur (30), et l'organe pousseur en position déployée fait saillie transversalement par rapport au palpeur (30).

12. Véhicule selon l'une quelconque des revendications précédentes, autonome et sans équipage.

13. Véhicule selon l'une quelconques des revendications précédentes, comprenant un dispositif de guidage automatique.

14. Véhicule selon l'une quelconques des revendications précédentes, dans lequel le chariot (4) est pourvu de roues de roulage sur le sol, comprenant au moins une roue motrice motorisée et au moins une roue directrice.

15. Véhicule selon l'une quelconque des revendications 1 à 12, mobile le long d'une voie ferrée prévue au sol ou suspendu à un rail le long duquel il se déplace.

16. Installation d'alimentation d'animaux d'élevage comprenant un véhicule selon l'une quelconque des revendications précédentes.

## Patentansprüche

1. Fahrzeug, umfassend einen Wagen (4) und eine an einem Ende des Wagens angeordnete Schubvorrichtung (12) zum Schieben von Nahrungsmitteln auf dem Boden auf die Seite des Fahrzeugs, wobei die Schubvorrichtung (12) einen Träger (22) und ein Schubelement (14), das von dem Träger getragen wird, umfasst, wobei das Schubelement (14) dazu gedacht ist, Nahrungsmittel auf dem Boden auf der Seite des Fahrzeugs in einer Querrichtung (T) des Fahrzeugs durch die Fahrt des Fahrzeugs in einer Längsrichtung (L) des Fahrzeugs, die zur Querrichtung (T) rechtwinklig ist, zu schieben, **dadurch gekennzeichnet, dass** das Schubelement (14) im Verhältnis zum Träger (22) translationsmäßig in der Querrichtung (T) zwischen einer eingezogenen Position, in der sich das Schubelement zwischen den Seitenrändern des Wagens (4) befindet, und mindestens einer ausgefahrenen Position, in der das Schubelement (14) im Verhältnis zum Wagen (4) seitlich vorsteht, beweglich ist.

2. Fahrzeug nach Anspruch 1, wobei die Schubvorrichtung (12) ein Ausfahrstellglied umfasst, um die Verschiebung des Schubelements (14) in der Querrichtung (T) zwischen der eingezogenen Position und der ausgefahrenen Position zu steuern.

3. Fahrzeug nach Anspruch 1 oder 2, wobei das Schubelement (14) in der Querrichtung (T) zwischen einer eingezogenen Position und zwei ausgefahrenen Positionen, die sich auf beiden Seiten der eingezogenen Position befinden, beweglich ist.

4. Fahrzeug nach einem der vorhergehenden Ansprüche, wobei das Schubelement (14) derart beweglich ist, dass es das Schubelement (14) dem Boden nähert oder davon entfernt, wenn die Schubvorrichtung an einem Fahrzeug montiert ist.

5. Fahrzeug nach einem der vorhergehenden Ansprüche, wobei das Schubelement (14) in einer senkrechten Richtung (Z), die zu der Längsrichtung (L) und der Querrichtung (T) rechtwinklig ist, beweglich ist.

6. Fahrzeug nach einem der vorhergehenden Ansprüche, wobei der Träger (22) in einer senkrechten Richtung (Z), die zu der Längsrichtung (L) und der Querrichtung (T) rechtwinklig ist, beweglich ist.

7. Fahrzeug nach einem der vorhergehenden Ansprüche, umfassend eine Erkennungsvorrichtung (28) zum Erkennen eines Hindernisses, das sich vor der Schubvorrichtung (12) befindet.

8. Fahrzeug nach Anspruch 7, wobei die Erkennungsvorrichtung (28) eine untere Konfiguration, um Hindernisse vor der Schubvorrichtung (12) von einer ersten Höhe (H1) im Verhältnis zum Boden aus zu erkennen, und eine obere Konfiguration, um Hindernisse vor der Schubvorrichtung (12) von einer zweiten Höhe (H2) aus, die höher als die erste Höhe (H1) ist, zu erkennen, umfasst.

9. Fahrzeug nach Anspruch 7 oder 8, wobei die Erkennungsvorrichtung eine Erkennung mit oder ohne Kontakt aufweist.

10. Fahrzeug nach einem der Ansprüche 7 bis 9, wobei die Erkennungsvorrichtung (28) einen Taster (30) umfasst, um ein Hindernis zu erkennen, das den Taster (30) berührt, wobei sich der Taster (30) in der Querrichtung (T) in einem Abstand von dem Schubelement (14) in der Längsrichtung (L) erstreckt.

11. Fahrzeug nach Anspruch 10, wobei sich das Schubelement (14) in Längsrichtung (L) gesehen in der eingezogenen Position mit dem Taster (30) fluchtend befindet, und das Schubelement in der ausgefahrenen Position im Verhältnis zu dem Taster (30) quer vorsteht.

12. Fahrzeug nach einem der vorhergehenden Ansprüche, autonom und unbemannt.

13. Fahrzeug nach einem der vorhergehenden Ansprüche, umfassend eine automatische Führungsvorrichtung.

14. Fahrzeug nach einem der vorhergehenden Ansprüche, wobei der Wagen (4) mit Bodenlaufrädern versehen ist, wozu mindestens ein motorisiertes Antriebsrad und mindestens ein Leitrad gehören.

15. Fahrzeug nach einem der Ansprüche 1 bis 12, das entlang einer Rollbahn, die auf dem Boden bereitgestellt wird, oder an einer Schiene hängend, an der es sich entlang bewegt, beweglich ist.

16. Nutztierernährungsanlage, umfassend ein Fahrzeug nach einem der vorhergehenden Ansprüche.

## Claims

1. A vehicle comprising a carriage (4) and a pusher device (12) provided at one extremity of the carriage (4) for pushing feed along the ground on the side of the vehicle, the pusher device (12) comprising a support (22) and a pusher member (14) supported by the support, the pusher member (14) being provided to push feed along the ground on the side of the vehicle following a transverse direction (T) of the vehicle due to the movement of the vehicle along a longitudinal direction (L) of the vehicle perpendicular to the transverse direction (T), **characterized in that** the pusher member (14) is translatable relative to the support (22) along the transverse direction (T) between a retracted position, in which the pusher member is situated between the lateral edges of the carriage (4), and at least one deployed position, in which the pusher member (14) protrudes laterally relative to the carriage (4).

2. The vehicle according to claim 1, wherein the pusher device (12) comprises a deployment actuator to command the movement of the pusher member (14) along the transverse direction (T) between the retracted position and the deployed position.

3. The vehicle according to claim 1 or 2, wherein the pusher member (14) is movable in the transverse direction (T) between a retracted position and two deployed positions situated on either side of the retracted position.

4. The vehicle according to any one of the preceding claims, wherein the pusher member (14) is movable so as to bring the pusher member (14) closer to the ground or further away therefrom when the pushing device is mounted on a vehicle.

5. The vehicle according to any one of the preceding claims, wherein the pusher member (14) is movable in a vertical direction (Z) perpendicular to the longitudinal direction (L) and the transverse direction (T).

6. The vehicle according to any one of the preceding claims, wherein the support (22) is movable in a vertical direction (Z) perpendicular to the longitudinal direction (L) and the transverse direction (T).

7. The vehicle according to any one of the preceding claims, comprising a detection device (28) for detecting an obstacle present in front of the pusher device (12).

8. The vehicle according to claim 7, wherein the detection device (28) has a low configuration to detect obstacles in front of the pusher device (12) from a first height (H1) relative to the ground and a high configuration to detect obstacles in front of the pusher device (12) from a second height (H2) higher than the first height (H1).

9. The vehicle according to claim 7 or 8, wherein the detection device uses contact or contactless detection.

10. The vehicle according to any one of claims 7 to 9, wherein the detection device (28) comprises a feeler (30) for detecting an obstacle touching the feeler (30), the feeler (30) extending in the transverse direction (T), away from the pusher member (14) in the longitudinal direction (L).

11. The vehicle according to claim 10, wherein, seen in the longitudinal direction (L), the pusher member (14) in the retracted position is situated aligned with the feeler (30), and the pusher member in the deployed position protrudes transversely relative to the feeler (30).

12. The vehicle according to any one of the preceding claims, autonomous and with no crew.

13. The vehicle according to any one of the preceding claims, comprising an automatic guiding device.

14. The vehicle according to any one of the preceding claims, wherein the carriage (4) is provided with wheels rolling on the ground, comprising at least one motorized drive wheel and at least one steering wheel.

15. The vehicle according to any one of claims 1 to 12, movable along a railroad track provided on the ground or suspended from a rail along which it moves.

16. An installation for feeding farm animals comprising a vehicle according to any one of the preceding claims.
